# EUROPÄISCHE PATENTSCHRIFT

(11) **EP 3 219 918 B1**
(45) Veröffentlichungstag und Bekanntmachung des Hinweises auf die Patenterteilung: **04.03.2020**
(21) Anmeldenummer: 17160065.3
(22) Anmeldetag: 09.03.2017
(51) Int. Cl.: F01D 5/18, F01D 9/02, F01D 9/04

(54) **GASTURBINE MIT EINER KÜHLEINRICHTUNG ZUR KÜHLUNG VON PLATTFORMEN EINES LEITSCHAUFELKRANZES DER GASTURBINE**
GASTURBINE WITH A COOLING DEVICE FOR COOLING PLATFORMS OF A GUIDE BLADE ASSEMBLY OF THE GAS TURBINE
TURBINE A GAZ AVEC UN DISPOSITIF DE REFROIDISSEMENT DE PLATEFORMES D'UNE COURONNE D'AUBES DIRECTRICES DE LA TURBINE À GAZ

(30) Priorität: 17.03.2016 DE 102016104957
(43) Veröffentlichungstag der Anmeldung: 20.09.2017
(73) Patentinhaber: Rolls-Royce Deutschland Ltd & Co KG, 15827 Blankenfelde-Mahlow (DE)
(72) Erfinder: Lehmann, Knut, 15827 Blankenfelde-Mahlow (DE); Sweidan, Hamish, 15827 Blankenfelde-Mahlow (DE); Kern, Christian, 15827 Blankenfelde-Mahlow (DE)
(74) Vertreter: Kronthaler, Wolfgang N.K.

(56) Entgegenhaltungen:
- EP-A1- 1 731 715
- EP-A1- 1 741 877
- WO-A1-2004/038181
- US-A- 3 670 497

## Beschreibung

Die Erfindung betrifft eine Gasturbine mit einer Kühleinrichtung zur Kühlung von Plattformen eines in einem Hauptströmungskanal einer Brennkammer nachgeordneten Leitschaufelkranzes der Gasturbine nach der im Oberbegriff des Patentanspruches 1 näher definierten Art.

Aus der Praxis ist es bekannt, zur Kühlung der Plattformen von hinter der ringförmigen Gasaustrittsöffnung der Brennkammer einer Gasturbine angeordneten Leitschaufeln, welche mit inneren und äußeren Plattformen einen Leitschaufelkranz bilden, Kühlluft über die Schnittstelle zwischen der Brennkammer und dem Leitschaufelkranz zu den Plattformen zu führen. Aufgrund der axialen und radialen Relativbewegungen zwischen diesen Komponenten bedingt durch mechanische Belastungen und thermische Verformungen sowie die verhältnismäßig langen Strömungswege zu den Hauptgasströmflächen der Plattformen vermischt sich die Kühlluft stark mit dem Heißgasstrom der Brennkammer, sodass die Kühlwirkung auf die Plattformoberflächen und die Ausbildung eines effektiven Kühlfilms hierauf unzureichend sind.

Aus der DE 198 13 779 A1 ist zur Kühlung der Plattformen eine Anordnung von Leitschaufeln einer Gasturbine bekannt, die stromab der ringförmigen Austrittsöffnung einer Brennkammer angeordnet sind, wobei in der Brennkammeraustrittswand Kühlluftausblasöffnungen vorgesehen sind, über die Kühlluft in den Heißgasstrom zu den Plattformen gelangen kann. Dabei kann es auch vorgesehen sein, dass Kühlluftausblasöffnungen unter Nutzung eines spezifischen Anordnungskriteriums in der Plattform selbst ausgebildet sind.

Eine weitere Art der Kühlung der Plattformen von hinter der Brennkammer einer Gasturbine angeordneten Leitschaufeln ist aus der EP 1 607 580 A2 bekannt, welche eine Plattformkühlanordnung mit Kühlluftausblaskanälen offenbart, die bezogen auf die Umfangsrichtung mindestens zu einem Teil in einer um einen bestimmten Winkel abgewinkelten Richtung angeordnet sind, um durch eine geeignete Kühlluftstrahlrichtung zu den Plattformen die Durchmischung des Kühlluftstroms mit dem Heißgasstrom zu vermindern sowie eine höhere Konzentration der Kühlluft im Endwandbereich und mithin eine wirksamere Kühlung der Plattformoberflächen zu erreichen.

Nachteilhafterweise lässt sich jedoch je nach Design des Leitschaufelkranzes und seinen inneren und äußeren Plattformen die Einbringung von Kühlluftbohrungen in der Plattform selbst in der gewünschten Ausführung bezüglich z. B. Winkel, spezielle Lochformungen etc. fertigungstechnisch häufig nicht realisieren. Folglich gelingt es in der Praxis oft nicht, die auch unmittelbar vor Schaufelblättern des Leitschaufelkranzes durch die Plattformen eingeblasene Kühlluft aufgrund eines hohen Mischungsgrads mit dem Heißgasstrom zur Heißgasabschirmung der Plattformen effektiv zu nutzen.

Aus der US 3,670,497 A ist eine ringförmige Verbrennungskammer mit einem inneren Element und einem äußeren Element bekannt. Das äußere Element endet in einem zylindrischen Flansch. Dieser Flansch wird durch ein äußere Gehäuse getragen. Ein zweites zylindrisches Element ist an dem zylindrischen Element befestigt. Ein Element erstreckt sich vom vorderen Ende des zylindrischen Elements nach vorne und nach außen und bildet einen Konus. Das äußere Ende des Elements ist mit einem sich radial erstreckenden Flansch ausgebildet. Ein anderes Flanschelement erstreckt sich von dem äußeren Gehäuse nach innen und verjüngt sich nach hinten zu einer Stelle, die von den zylindrischen Elementen radial nach außen beabstandet ist. Entlang dieser Kante erstreckt sich das Flanschelement radial nach innen und bildet ein Stützringelement an einer Stelle mit einem vorbestimmten Abstand von dem zylindrischen Element. Ein Stützringelement ist mit einem sich nach innen erstreckenden Flansch und einem sich nach vorne erstreckenden Flansch ausgebildet. Der sich nach innen erstreckende Flansch ist an der Vorderseite des Flanschelements mit seiner hinteren Fläche an der vorderen Fläche des Stützringelements befestigt, wo diese zwei Elemente zwischen dem Flansch und einem Kopf einer Vielzahl von Nieten zusammengehalten werden.

Eine Gasturbinenanlage mit einer Brennkammer und einer ersten Turbinenleitschaufel ist in der EP 1 741 877 A1 offenbart. Eine Tragstruktur ist mit einem daran befestigten metallischen Hitzeschildelement ausgeführt, wobei das Hitzeschildelement mittels eines Befestigungsabschnitts mit der Tragstruktur verbunden ist. Das Hitzeschildelement weist einen Überlappbereich auf, in dem es mit einem Schaufelfuß der Turbinenleitschaufel teilweise überlappt. Das Hitzeschildelement weist im Überlappbereich einen Umfangsabschnitt auf, der an die Kontur des Schaufelfußes angepasst ist. Der Umfangsabschnitt weist Kühlluftbohrungen auf, durch die Kühlluft in einen Spalt zwischen dem Hitzeschildelement und dem Schaufelfuß eingeblasen werden kann.

Die WO 2004/038181 A1 offenbart ein Gasturbinentriebwerk mit einem Kompressor, einer Brennkammer und einer Turbine, die einen Strom von heißem Gas von der Brennkammer zu der Turbine erzeugt. Die Brennkammer wird von einer Brennkammerwand begrenzt, auf der in einem an eine Leitschaufel grenzenden Bereich eine Abdeckung angeordnet ist. Die Brennkammerwand umfasst eine Prallplatte mit einer Reihe von Prallöffnungen zum Kühlen der Brennkammerwand. Die durch die Prallöffnungen geführte Luft wird zu der Abdeckung geleitet, um einen Querstromstrahl von komprimierter Luft zu erzeugen, die in den Heißgasstrom von der Brennkammer eingeleitet wird.

Eine Gasturbine mit einer von einer Umfassungswand umgebenen Brennkammer ist in der EP 1 731 715 A1 beschrieben, wobei ein Arbeitsmedium von der Brennkammer zu einer mit mehreren Leitschaufeln ausgeführten Turbineneinheit geführt wird. Die Leitschaufeln weisen jeweils eine Plattform auf. Die Umfassungswand weist auf ihrer dem Arbeitsmedium zugewandten Seite eine aus Hitzeschildelementen gebildete Innenauskleidung auf, die auf einer Gehäusewand aufgebracht sind. Ein zum Ausgleich thermischer Ausdehnungsbewegungen vorgesehener Ausgleichsspalt zwischen Wandelementen der Turbineneinheit und der Umfassungswand der Brennkammer ist durch eine Anzahl von separaten Verschlussbauteilen verschlossen. Das jeweilige Verschlussbauteil weist ein auf den Wandelementen der Turbineneinheit aufliegendes Abdeckelement auf. In die Gehäusewand ist ein Kühlluftkanal integriert, durch den Kühlluft geführt wird. Ein Teilstrom der Kühlluft wird durch Austrittskanäle des Abdeckelements aus dem Ausgleichsspalt geführt und vermischt sich mit dem in der Turbineneinheit strömenden Arbeitsmedium M.

Der Erfindung liegt die Aufgabe zugrunde, eine Gasturbine mit einer Kühleinrichtung zur Kühlung von Plattformen eines in einem Hauptströmungskanal einer Brennkammer nachgeordneten Leitschaufelkranzes der Gasturbine der eingangs genannten Art zu schaffen, die eine effektive Kühlung, insbesondere eine Filmkühlung, in allen Oberflächenbereichen der Plattformen gewährleistet.

Erfindungsgemäß wird diese Aufgabe mit einer Gasturbine mit den Merkmalen des Patentanspruchs 1 gelöst.

Es wird eine Gasturbine mit einer Kühleinrichtung zur Kühlung von Plattformen eines in einem Hauptströmungskanal einer Brennkammer nachgeordneten Leitschaufelkranzes der Gasturbine vorgeschlagen, wobei erfindungsgemäß vorgesehen ist, dass in einer Wand der Plattformen Kühlluftdurchlassöffnungen vorgesehen sind, über die Kühlluft zur Filmkühlung zu Oberflächen der Plattformen geleitet wird, wobei die Wand wenigstens bereichsweise zumindest zweischichtig mit einer aus Sicht des Hauptströmungskanals äußeren Wandung und einer hiervon durch einen Hohlraum beabstandeten inneren Wandung ausgebildet ist, wobei der Hohlraum durch wenigstens eine Kühllufteinblasöffnung in der äußeren Wandung mit Kühlluft beaufschlagbar ist und wenigstens eine Kühlluftausblasöffnung in stromabwärtiger Richtung zu den Oberflächen der Plattformen verlaufend in der inneren Wandung angeordnet ist.

Die Erfindung ermöglicht es, Kühlluft von einem den Leitschaufelkranz umgebenden Ringraum eines Sekundärluftbereichs direkt durch die Plattformen des Leitschaufelkranzes zu den Oberflächen der Plattformen mit einem für eine Filmkühlung der Oberflächen optimalen Winkel zu führen und gleichzeitig fertigungstechnische Hindernisse an der gewünschten Winkelführung der Kühlluftausblasöffnung zu den Oberflächen der Plattformen zu umgehen.

Die zumindest zweischichtige Ausgestaltung der Wand der Plattformen mit einem Hohlraum, in den Kühlluft mit hohem Druck durch Kühllufteinblasöffnungen eingebracht wird und hieraus über wenigstens eine geeignet geneigte Kühlluftausblasöffnung an die Oberflächen der Plattformen geführt wird, erlaubt eine hocheffiziente Kühlung der Oberfläche der Plattformen in einem unmittelbar stromauf vor den Schaufelblättern liegenden Bereich unabhängig von den fertigungstechnischen Restriktionen, welche eine anders gewinkelte Anordnung der wenigstens einen Kühllufteinblasöffnung in den Hohlraum verlangen können. Das heißt mit anderen Worten, dass der Hohlraum durch beliebig in der äußeren, dem Hauptströmungskanal mit Heißgas abgewandten Wandung angeordnete Kühllufteinblasöffnungen mit Kühlluft beaufschlagt werden kann und diese hierin umgelenkt und durch eine für die Kühlwirkung optimal gestaltete Kühlluftausblasöffnung in stromabwärtiger Richtung zu den Oberflächen der Plattformen ausgeblasen werden kann.

Die wenigstens eine Kühlluftausblasöffnung kann dabei in stromabwärtiger Richtung sowohl in axialer wie in Umfangsrichtung den Kühlerfordernissen entsprechend schräg verlaufen, wobei bei einer Vielzahl von Kühlluftausblasöffnungen eine kontinuierliche oder diskontinuierliche Anordnung der Kühlluftausblasöffnungen auch mit unterschiedlichen Ausrichtungen bzw. Winkelanordnungen möglich ist.

Bei einer einfachen Ausführung der Erfindung kann der Hohlraum integral bzw. einstückig mit wenigstens einer der Plattformen ausgebildet sein. Ein solcher Hohlraum kann durch einen entsprechenden Kern beim Gießen der Plattformen hergestellt werden, wobei die wenigstens eine Kühllufteinblasöffnung und die wenigstens eine Kühlluftausblasöffnung durch geeignete Fertigungsverfahren wie z. B. Bohren oder Fräsen in der Plattformwand ausgebildet sein können.

Bei der Ausbildung des Hohlraums an den Plattformen ist es vorteilhaft, wenn die innere, dem Hauptströmungskanal zugewandte Wandung durch ein separates, blechartiges Bauelement gebildet ist. Ein solches separates Bauelement kann unabhängig von den Leitschaufelsegmenten und deren Plattformen bearbeitet werden und ermöglicht eine vorteilhafte Platzierung, Anzahl und Winkelführung bei der Einbringung bzw. Fertigung der Kühlluftausblasöffnungen.

Der Begriff "blechartig" ist vorliegend in erster Linie geometrisch im Sinne eines dünnwandigen, flächigen Metallelements zu verstehen und bedeutet keine Einschränkung auf ein bestimmtes Herstellungsverfahren. Mithin kann das blechartige Bauelement z. B. sowohl ein Walzprodukt als auch ein Gussprodukt darstellen.

Ein solches blechartiges Bauelement, welches wie ein Hitzeschild zur Heißluftabschirmung der Plattformen wirkt, kann mit wenigstens einer Befestigungseinrichtung mittels kraft-, form- wie auch stoffschlüssiger Verbindung an der äußeren Wandung in einem Bereich zwischen dem stromaufseitigen Ende und der Schaufelanströmkante der Plattformen angeordnet sein.

In einer sehr vorteilhaften Ausführung kann das blechartige Bauelement alternativ oder zusätzlich mit wenigstens einer Befestigungseinrichtung an einem stromaufseitigen Ende der Wand im Bereich einer Dichtung gegenüber der Brennkammerwand befestigt sein, wobei dies den Vorteil hat, dass eine üblicherweise ohnehin vorhandene Befestigungseinrichtung zur Befestigung der Dichtung an der Plattformwand zugleich zur Befestigung des blechartigen Bauelements genutzt werden kann. Dadurch entfällt z. B. ein zusätzlicher Haltebolzen zur Anbringung des blechartigen Bauelements.

Bedingt durch die Hauptströmungsrichtung in der Gasturbine kann eine Befestigung des die innere Wandung bildenden blechartigen Bauelements an seinem stromaufseitigen Ende gegenüber der äußeren Wandung unter Ausbildung des Hohlraums ausreichend sein, insbesondere wenn das blechartige Bauelement unter entsprechender Vorspannung angebracht ist.

Je nach Strömungsbedingungen und Dimensionierung der Befestigungseinrichtung kann es vorteilhaft sein, wenn das blechartige Bauelement mit seinem stromabseitigen Ende an der äußeren Wandung festgelegt ist. Hierzu kann beispielsweise eine formschlüssige Verbindung vorgesehen sein, welche clipsartig ausgebildet sein kann. Dabei kann das stromabseitige Ende des blechartigen Bauelements eine oder mehrere Ausnehmungen aufweisen, welche eine Hinterschneidung an der jeweiligen Plattform in Radialrichtung untergreifen.

Auch hierbei kann es vorteilhaft sein, wenn das blechartige Bauelement eine definierte Vorspannung nach der Montage aufweist, welche die Clipswirkung an der Hinterschneidung entsprechend erhöht.

Je nach Ausbildung und der damit verbundenen Vorspannung nach der Montage des Bauelements kann es jedoch auch ausreichend sein, wenn das blechartige Bauelement mit seinem stromabseitigen Ende an der inneren Seite der äußeren Wandung einfach aufliegt, wobei zur Ausbildung und Sicherstellung des Hohlraums zwischen der äußeren Wandung und dem blechartigen Bauelement vorzugsweise ein der radialen Tiefe des Hohlraums entsprechendes Auflageelement an dem blechartigen Bauteil vorgesehen sein kann. Dieses Auflageelement kann schienenartig oder in Form von kurzen Stegen mit jeder Geometrie ausgebildet sein.

Aus strömungstechnischen Gründen ist es vorteilhaft, wenn die innere Kontur der dem Leitschaufelkranz vorgelagerten Bauteile wie z. B. einer Brennkammerwandung möglichst fließend bzw. fluchtend in die Oberflächenkontur der Plattformen übergeht, so dass bei einer bevorzugten Ausführung der Erfindung die Innenkontur der inneren Wandung bzw. des blechartigen Bauelements mit einer Innenkontur der dem Leitschaufelkranz vorgelagerten Bauteile wenigstens annähernd fluchtend ausgebildet ist.

Hierzu kann die äußere Wandung im Bereich des stromabseitigen Endes des Hohlraums und in einem stromaufseitigen Bereich unmittelbar vor Schaufelblättern des Leitschaufelkranzes eine insbesondere S-förmige Querschnittskrümmung radial einwärts in Richtung des Hauptströmungskanals aufweisen, womit die äußere Wandung stromauf der Anströmseite der Schaufelblätter nach außen in ihrem äußeren Umfang erweitert wird und hierdurch an der inneren Seite der äußeren Wandung Bauraum für die innere Wandung bzw. das Bauelement bereitgestellt wird. Letzteres kann hiermit so angeordnet werden, dass die innere Wandung bezüglich ihrer Innenkontur wenigstens annähernd mit der Innenkontur der dem Leitschaufelkranz vorgelagerten Bauteile fluchtet und zugleich mit der durch die S-förmige Querschnittskrümmung die Oberfläche der Plattformen im unmittelbaren Bereich vor den Schaufelblättern bildenden äußeren Wandung fluchtet.

Zur Ausbildung der Kühllufteinblasöffnungen kann ein Abstand in Axialrichtung der Gasturbine zwischen dem blechartigen Bauelement und den Oberflächen der Plattformen in einem stromaufwärtigen Bereich unmittelbar vor Schaufelblättern des Leitschaufelkranzes ausreichend sein, wobei das entsprechende stromabseitige Ende des blechartigen Bauelements in dem Bereich zwischen dem mit Kühlluft beaufschlagten Hohlraum und dem stromabseitigen Ende der inneren, dem Hauptströmungskanal zugewandten Oberfläche des blechartigen Bauteils vorzugsweise mit einem Radius bzw. einer Schrägung ausgebildet ist, welche eine gewünschte Kühlluftanströmrichtung zur Ausbildung einer Filmkühlung auf den Plattformoberflächen gewährleistet. Die wenigstens eine Kühlluftausblasöffnung kann in der inneren Wandung jedoch auch durch wenigstens eine Bohrung oder einer Freimachung bzw. Aussparung z. B. in Form eines Schlitzes mit einer Mittelachse ausgebildet sein, deren Erstreckung vorzugsweise einwärts zum Hauptströmungskanal hin in stromabseitiger Richtung derart gewinkelt verläuft, dass die aus der Kühlluftausblasöffnung austretende Kühlluft auf den Oberflächen der Plattformen zumindest in einem Bereich unmittelbar vor Schaufelblättern des Leitschaufelkranzes einen Kühlfilm bildet.

Aus fertigungstechnischen Gründen ist es häufig am einfachsten, aufgrund der üblicherweise stromauf aus Sicht des Hauptströmungskanals nach außen vorgesehenen Krümmung der Plattformen Kühllufteinblasöffnungen hin zu dem Hohlraum als Bohrlöcher oder Freimachungen bzw. Aussparungen in stromaufseitiger Richtung einwärts bzw. radial in Richtung des Hauptströmungskanals einzubringen, wobei die Umlenkung der Kühlluft in dem Hohlraum erfolgt.

Wenn die innere Wandung der Plattformwand durch ein separates blechartiges Bauteil gebildet ist, kann dieses sowohl als ein umlaufender Ring oder aber auch segmentförmig ausgebildet sein.

Wenngleich dies nicht bei jeder Ausführung erforderlich ist, kann es hinsichtlich der Ausgestaltung des blechartigen Bauelements als ein Hitzeschild vorteilhaft sein, wenn dieses aus einer Hochtemperaturlegierung hergestellt ist und gegebenenfalls mit einer zusätzlichen hitzebeständigen Beschichtung zumindest an seiner mit Heißgasstrom beaufschlagten inneren Oberfläche ausgebildet ist.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: eine Teilansicht der Brennkammer einer Gasturbine mit an die Gasaustrittsöffnung unmittelbar angeschlossenem Leitschaufelkranz und einer Kühleinrichtung zur Kühlung der Plattformen des Leitschaufelkranzes mit einem ein Hitzeschild bildenden separaten, blechartigen Bauelement;
- Fig. 2: eine einem Ausschnitt der Teilansicht der Fig. 1 entsprechende Darstellung des Übergangsbereichs zwischen der Brennkammer und dem Leitschaufelkranz, wobei die Kühleinrichtung für die Plattformen des Leitschaufelkranzes ein alternativ gegenüber der Ausführung nach Fig. 1 angeordnetes und befestigtes blechartiges Bauelement aufweist;
- Fig. 3: eine der Fig. 1 entsprechende Teilansicht der Brennkammer und des Leitschaufelkranzes mit zwei weiteren alternativen Ausführungen der Kühleinrichtung jeweils an inneren Plattformen und äußeren Plattformen des Leitschaufelkranzes; und
- Fig. 4: eine der Fig. 2 entsprechende Teilansicht der Schnittstelle zwischen der Brennkammer und dem Leitschaufelkranz mit einer Kühleinrichtung, welche integral an den Plattformen ausgebildet ist.

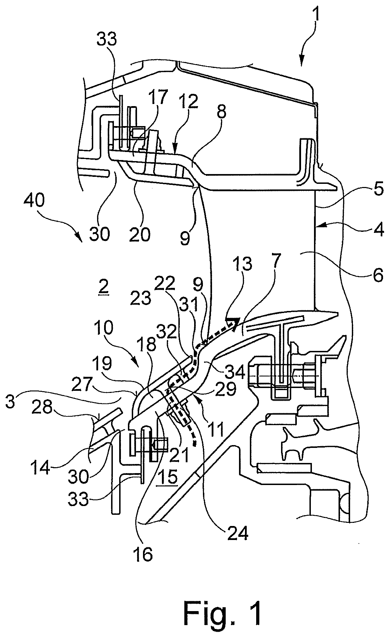

Die Fig. 1 bis Fig. 4 zeigen jeweils einen Ausschnitt einer Gasturbine 1, welche als Flugzeugturbine ausgebildet ist, mit vorliegend einer Brennkammer 2 und einem einer Austrittsöffnung 3 der Brennkammer 2 in einem Hauptströmungskanal 40 nachgeschalteten Leitschaufelkranz 4, welcher segmentförmig mit einer Vielzahl von Leitschaufeln 5 in Umfangsrichtung aufgebaut ist, welche jeweils in bekannter Art und Weise ein Schaufelblatt 6 zwischen einer radial inneren Plattform 7 und einer radial äußeren Plattform 8 aufweisen, zwischen denen sie gehalten sind.

Wie eingangs bereits erläutert, müssen die der Austrittsöffnung 3 der Brennkammer 2 zugewandten Oberflächen 9 der Plattformen 7, 8 aufgrund der durch die Austrittsöffnung 3 der Brennkammer 2 austretenden Heißgasströmung des Hauptströmungskanals 40 gekühlt werden, wozu Kühlluft 13 über eine Kühleinrichtung 10 von einem die Brennkammer 2 bzw. eine Brennkammerwand 14 und eine Wand 11, 12 der Plattformen 7, 8 umgebenden Sekundärluftbereich 15 mit höherem Druck als in dem Hauptströmungskanal 40 an die Oberflächen 9 der Plattformen 7, 8 in einem Bereich unmittelbar stromauf vor einer Anströmseite der Schaufelblätter 6 geführt wird, um an den Oberflächen 9 eine Filmkühlung und eine Abschirmung der Plattformen 7, 8 gegenüber dem aus der Brennkammer 2 austretenden Heißgasstrom zu erzielen. Da das Wirkprinzip der vorgeschlagenen Kühlung und der prinzipielle Aufbau bei den Ausführungen der Fig. 1 bis Fig. 4 analog ist, werden nachfolgend bei den unterschiedlichen Ausführungen für funktionsgleiche Bauelemente die gleichen Bezugszeichen verwendet.

Zur Leitung von Kühlluft 13 an die Oberflächen 9 der Plattformen 7, 8 ist die Kühleinrichtung 10 derart ausgestaltet, dass die Wand 11, 12 der Plattformen 7, 8 wenigstens bereichsweise zweischichtig mit einer vom Hauptströmungskanal 40 aus betrachtet äußeren Wandung 16 bzw. 17 und einer hiervon durch einen Hohlraum 18 beabstandeten inneren Wandung 19 bzw. 20 ausgebildet ist. In den Hohlraum 18 führt zumindest eine Kühllufteinblasöffnung 21 von dem Sekundärluftbereich 15 durch die äußere Wandung 16 bzw. 17. Von dem Hohlraum 18 führt wiederum wenigstens eine Kühlluftausblasöffnung 22 in stromabwärtiger Richtung zu den Oberflächen 9 der Plattformen 7, 8 durch die innere Wandung 19 bzw. 20 der Wand 11, 12 der Plattformen 7, 8.

Die Anzahl und die Form der Kühllufteinblasöffnungen 21 und Kühlluftausblasöffnungen 22 ist in den Figuren nur symbolisch gezeigt, sodass auch eine hiervon abweichende Anzahl von Kühlluftdurchlassöffnungen 21, 22 in unterschiedlicher Form zum Beispiel von Schlitzen oder Rundbohrungen und in unterschiedlichster regelmäßiger oder unregelmäßiger, gruppierter oder vereinzelter Anordnung je nach Plattformgeometrie zur Erzielung der gewünschten Filmkühlung denkbar ist.

Bei den in den Fig. 1 bis Fig. 3 gezeigten Ausführungen der Kühleinrichtung 10 ist die innere, heißgaszugewandte Wandung 19 bzw. 20 der Wand 11, 12 der Plattformen 7, 8 jeweils durch ein separates, blechartiges Bauelement 23 gebildet, welches mit wenigstens einer Befestigungseinrichtung 24, 25, 26 an der äußeren Wandung 16 bzw. 17 der Wand 11 bzw. 12 der Plattformen 7, 8 befestigt ist. Das blechartige Bauelement 23 ist bei jeder gezeigten Ausführung als ein Hitzeschild aus einer Hochtemperaturlegierung ausgestaltet und weist eine der Oberflächenkontur der Plattformen 7, 8 angepasste Oberflächenkrümmung auf, wobei eine Innenkontur 27 der inneren Wandung 19, 20 der Plattformen 7, 8 bzw. des blechartigen Bauelements 23 vorliegend einer Innenkontur 28 der stromauf angrenzenden Brennkammerwand 14 entspricht. Die Innenkontur 28 der Brennkammerwand kann dabei ebenfalls mit einem gekühlten Hitzeschild analog dem blechartigen Bauelement 23 der Kühleinrichtung 10 ausgebildet sein.

In Fig. 1 ist eine Ausführung des blechartigen Bauelements 23 gezeigt, bei dem dieses als Befestigungseinrichtung zur Festlegung an der äußeren Wandung 16 bzw. 17 einen Haltebolzen 24 aufweist, welcher die äußere Wandung 16 bzw. 17 durchgreift und hier hohl ausgebildet ist, sowie Durchtrittsöffnungen 29 im Bereich des Hohlraums 18 aufweist, so dass der Haltebolzen 24 gleichzeitig eine Kühllufteinblasöffnung 21 bildet, über die der Hohlraum 18 mit Kühlluft aus dem Sekundärluftbereich 15 beaufschlagbar ist.

Selbstverständlich können neben der durch den Haltebolzen 24 gebildeten Kühllufteinblasöffnung auch noch weitere mittels Bohrung durch die äußere Wandung 16 bzw. 17 eingebrachte Kühllufteinblasöffnungen vorgesehen sein.

Bei der Ausführung gemäß Fig. 1 liegt das blechartige Bauelement mit seinem stromaufseitigen Ende im Bereich einer durch einen Abstand gebildeten Schnittstelle 30 zwischen der Austrittsöffnung 3 der Brennkammer 2 und dem Leitschaufelkranz 4 an der äußeren Wandung 16 bzw. 17 an, während das blechartige Bauelement 23 an seinem stromabseitigen Ende durch einen Abstand 31 gegenüber der unmittelbar vor der Anströmseite der Schaufelblätter 6 liegenden Oberfläche 9 der Plattformen 7, 8 zumindest eine Kühlluftausblasöffnung bildet, in deren Bereich das blechartige Bauelement 23 durch ein der radialen Tiefe des Hohlraums 18 entsprechendes Abstands- bzw. Auflageelement 32 an der inneren Seite der äußeren Wandung 16 bzw. 17 aufliegt.

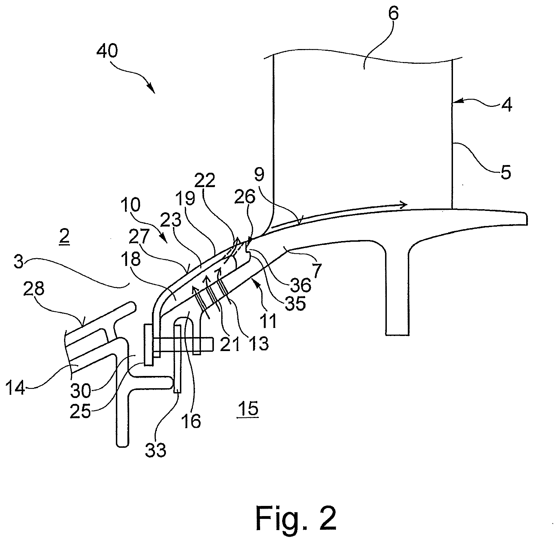

Im Unterschied zu der Ausführung nach Fig. 1 ist das blechartige Bauelement 23 in der in Fig. 2 gezeigten Ausführung anderweitig an der äußeren Wandung 16 befestigt und hinsichtlich der Kühllufteinblasöffnungen 21 und Kühlluftausblasöffnungen 22 abweichend gestaltet. Die Ausführung nach Fig. 2 zeigt eine Festlegung des blechartigen Bauelements 23 an seinem stromaufseitigen Ende mittels eines Haltebolzens 25 einer Klappendichtung 33, welche in an sich bekannter Art und Weise zur Abdichtung zwischen der Austrittsöffnung 3 der Brennkammer 2 und den Plattformen 7, 8 des Leitschaufelkranzes 4 vorgesehen ist und über den unterschiedlichen Druck in dem Sekundärluftbereich 15 und dem Hauptströmungskanal 40 in Dichtposition kippbar ist. Die duale Verwendung des Haltebolzens 25 der Klappendichtung 33 spart gegenüber der Ausführung nach Fig. 1 einen zusätzlichen Haltebolzen ein und ermöglicht eine freiere Anordnung der Kühllufteinblasöffnungen 21 in den Hohlraum 18.

An seinem stromabseitigen Ende ist das blechartige Bauelement 23 bei der Ausführung nach Fig. 2 formschlüssig an den Plattformen 7 bzw. deren Oberfläche 9 festgelegt, wobei die Oberfläche 9 der Plattformen 7 wie bei allen in den Fig. 1 bis Fig. 3 gezeigten allgemein vorteilhaften Ausgestaltungen durch eine insbesondere S-förmige Querschnittskrümmung 34 in dem Hauptströmungskanal 40 abgewandter Richtung in die innere Seite der äußeren Wandung 16 bzw. 17 der Wand 11 bzw. 12 der Plattformen 7, 8 übergeht, wodurch Bauraum für die Schaffung des Hohlraums 18 und die Anordnung des blechartigen Bauelements 23 als innere Wandung 19 bzw. 20 geschaffen wird.

Die formschlüssige Festlegung des blechartigen Bauelements 23 in der in Fig. 2 gezeigten Ausführung ist als eine Art Clipsverbindung gestaltet, bei der eine Aussparung 36 an dem stromabseitigen Ende des blechartigen Bauelements 23 in Radialrichtung unter eine Hinterschneidung 35 an den Plattformen 7 geklemmt wird.

Die Kühlluftausblasöffnungen 22 sind hier in beliebiger Anzahl und vorliegend stromab geschrägt in das blechartige Bauelement eingebracht, wobei hier eine Mittelachse der als Bohrung oder Schlitz ausgeführten Kühlluftausblassöffnungen 22 radial in Richtung des Hauptströmungskanals 40 in stromabseitiger Richtung derart gewinkelt verläuft, dass die aus der jeweiligen Kühlluftausblasöffnung 22 austretende Kühlluft auf den Oberflächen 9 der Plattformen 7, 8 in einen Bereich unmittelbar vor den Schaufelblättern 6 einen Kühlfilm bildet. Die Kühllufteinblasöffnungen 21 sind auch hier aus Gründen der einfacheren Fertigbarkeit in stromaufseitiger Richtung radial in Richtung des Hauptströmungskanals 40 verlaufend ausgebildet, sodass ebenfalls eine Kühlluftumlenkung in dem Hohlraum 18 stattfindet.

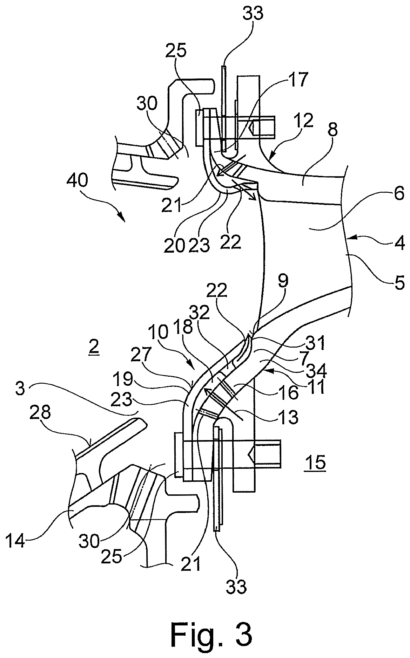

In Fig. 3 sind zwei geringfügige Abwandlungen der Kühleinrichtung 10 ersichtlich, bei der die blechartigen Bauelemente 23 in radial inneren Plattformen 7 und in radial äußeren Plattformen 8 jeweils wiederum den Haltebolzen 25 der Klappendichtung 33 als Befestigungseinrichtung nutzen. Die blechartigen Haltelemente 23 sind bei der Ausführung nach Fig. 3 mit einer derart großen Eigenspannung ausgeführt, dass sie mit ihrem stromabseitigen Ende an der inneren Seite der äußeren Wandung 19 bzw. 20 ohne weitere Befestigung aufliegen und lediglich durch das Auflageelement 32 unter Ausbildung des Hohlraums 18 hiervon beabstandet sind.

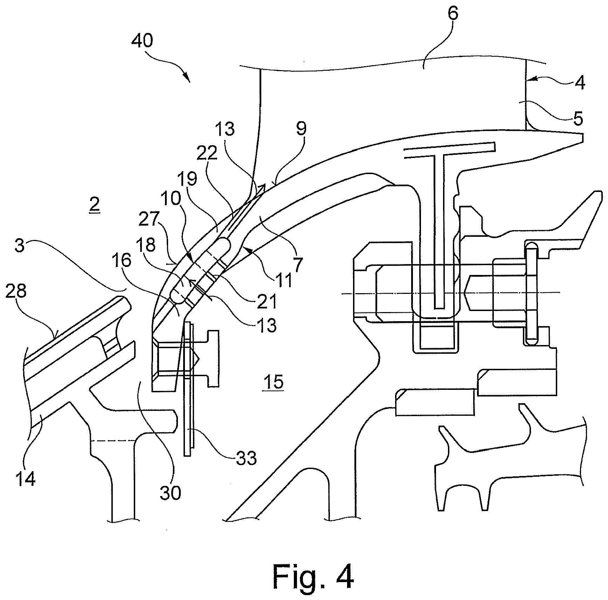

Wie aus der Fig. 4 hervorgeht, kann der Hohlraum 18 auch integral bzw. einstückig mit den Plattformen 7, 8 ausgebildet sein, wobei er im Zuge des Gießverfahrens mit den Plattformen 7, 8 hergestellt werden kann. Die Anordnung und Ausbildung der Kühllufteinblasöffnungen 21 und Kühlluftausblasöffnungen 22 kann wie bei den anderen Ausführungen beliebig, beispielsweise durch spanende Bearbeitung, erfolgen.

### Bezuqszeichenliste

- 1: Gasturbine
- 2: Brennkammer
- 3: Austrittsöffnung der Brennkammer
- 4: Leitschaufelkranz
- 5: Leitschaufel
- 6: Schaufelblatt
- 7: radial innere Plattform
- 8: radial äußere Plattform
- 9: Oberfläche der Plattform
- 10: Kühleinrichtung
- 11: Wand
- 12: Wand
- 13: Kühlluft
- 14: Brennkammerwand
- 15: Sekundärluftbereich
- 16: äußere Wandung
- 17: äußere Wandung
- 18: Hohlraum
- 19: innere Wandung
- 20: innere Wandung
- 21: Kühllufteinblasöffnung
- 22: Kühlluftausblasöffnung
- 23: blechartiges Bauelement
- 24: Befestigungseinrichtung, Haltebolzen
- 25: Befestigungseinrichtung, Haltebolzen Klappendichtung
- 26: Befestigungseinrichtung
- 27: Innenkontur Plattform
- 28: Innenkontur Brennkammer
- 29: Durchtrittsöffnung
- 30: Schnittstelle
- 31: Abstand
- 32: Auflageelement
- 33: Klappendichtung
- 34: S-förmige Querschnittskrümmung
- 35: Hinterschneidung
- 36: Ausnehmung
- 40: Hauptströmungskanal

## Patentansprüche

1. Gasturbine (1) mit einer Kühleinrichtung (10) zur Kühlung von Plattformen (7, 8) eines in einem Hauptströmungskanal (40) einer Brennkammer (2) nachgeordneten Leitschaufelkranzes (4) der Gasturbine (1), **dadurch gekennzeichnet, dass** in einer Wand (11, 12) der Plattformen (7, 8) Kühlluftdurchlassöffnungen (21, 22) vorgesehen sind, über die Kühlluft (13) zur Filmkühlung zu Oberflächen (9) der Plattformen (7, 8) geleitet wird, wobei die Wand (11,12) wenigstens bereichsweise zumindest zweischichtig mit einer aus Sicht des Hauptströmungskanals (40) äußeren Wandung (16, 17) und einer hiervon durch einen Hohlraum (18) beabstandeten inneren Wandung (19, 20) ausgebildet ist, wobei der Hohlraum (18) durch wenigstens eine Kühllufteinblasöffnung (21) in der äußeren Wandung (16, 17) mit Kühlluft (13) beaufschlagbar ist und wenigstens eine Kühlluftausblasöffnung (22) in stromabwärtiger Richtung zu den Oberflächen (9) der Plattformen (7, 8) verlaufend in der inneren Wandung (19, 20) angeordnet ist.

2. Gasturbine (1) nach Anspruch 1, **dadurch gekennzeichnet, dass** der Hohlraum (18) integral mit wenigstens einer der Plattformen (7) ausgebildet ist.

3. Gasturbine (1) nach Anspruch 1 oder 2, **dadurch gekennzeichnet, dass** die innere Wandung (19, 20) durch ein separates, blechartiges Bauelement (23) gebildet ist.

4. Gasturbine (1) nach Anspruch 3, **dadurch gekennzeichnet, dass** das blechartige Bauelement (23) mit wenigstens einer Befestigungseinrichtung (24, 25, 26) an der äußeren Wandung (16, 17) befestigt ist.

5. Gasturbine (1) nach Anspruch 3 oder 4, **dadurch gekennzeichnet, dass** das blechartige Bauelement (23) mit wenigstens einer Befestigungseinrichtung (25) an einem stromaufseitigen Ende der Wand (11 ,12) im Bereich einer Dichtung (33) gegenüber einer Brennkammerwand (14) befestigt ist.

6. Gasturbine (1) nach Anspruch 5, **dadurch gekennzeichnet, dass** die Befestigungseinrichtung durch einen Haltebolzen (24, 25) zur Befestigung der Dichtung (33) an der Wand (11 ,12) gebildet ist.

7. Gasturbine (1) nach einem der Ansprüche 3 bis 6, **dadurch gekennzeichnet, dass** das blechartige Bauelement (23) mit seinem stromabseitigen Ende formschlüssig, insbesondere mittels einer eine Hinterschneidung (35) an der jeweiligen Plattform (7, 8) untergreifenden Ausnehmung (36), an wenigstens einer der Plattformen (7, 8) festgelegt ist.

8. Gasturbine (1) nach einem der Ansprüche 3 bis 6, **dadurch gekennzeichnet, dass** das blechartige Bauelement (23) durch definierte Vorspannung mit seinem stromabseitigen Ende an der inneren Seite der äußeren Wandung (16, 17) aufliegt, wobei vorzugsweise ein der radialen Tiefe des Hohlraumes (18) entsprechendes Auflageelement (32) an dem blechartigen Bauelement (23) vorgesehen ist.

9. Gasturbine (1) nach einem der Ansprüche 1 bis 8, **dadurch gekennzeichnet, dass** die Innenkontur (27) der inneren Wandung (19, 20) mit einer Innenkontur (28) eines angrenzenden Bauteils, insbesondere einer Brennkammerwand (14), wenigstens annähernd fluchtend ausgebildet ist.

10. Gasturbine (1) nach einem der Ansprüche 1 bis 9, **dadurch gekennzeichnet, dass** das blechartige Bauelement (23) als ein Hitzeschild aus einer Hochtemperaturlegierung und gegebenenfalls mit einer zusätzlichen hitzebeständigen Beschichtung ausgebildet ist.

11. Gasturbine (1) nach einem der Ansprüche 1 bis 10, **dadurch gekennzeichnet, dass** das blechartige Bauelement (23) als ein umlaufender Ring oder segmentförmig ausgebildet ist.

12. Gasturbine (1) nach einem der Ansprüche 1 bis 11, **dadurch gekennzeichnet, dass** als Kühllufteinblasöffnung (21) in der äußeren Wandung (16, 17) wenigstens eine Aussparung, insbesondere eine Bohrung oder ein Schlitz, mit einer Mittelachse ausgebildet ist, deren Erstreckung bezogen auf den Hauptströmungskanal (40) einwärts in stromaufseitige Richtung verläuft und als Kühlluftausblasöffnung (22) in der inneren Wandung (19, 20) wenigstens eine Aussparung, insbesondere eine Bohrung oder ein Schlitz, mit einer Mittelachse ausgebildet ist, deren Erstreckung bezogen auf den Hauptströmungskanal (40) einwärts in stromabseitige Richtung derart gewinkelt verläuft, dass die aus der Kühlluftausblasöffnung (22) austretende Kühlluft auf den Oberflächen (9) der Plattformen (7, 8) in einem Bereich unmittelbar vor Schaufelblättern (6) des Leitschaufelkranzes (4) einen Kühlfilm bildet.

13. Gasturbine (1) nach einem der Ansprüche 3 bis 12, **dadurch gekennzeichnet, dass** die äußere Wandung (16, 17) im Bereich des stromabseitigen Endes des Hohlraums (18) und in einem stromaufseitigen Bereich unmittelbar vor Schaufelblättern (6) des Leitschaufelkranzes (4) eine insbesondere S-förmige Querschnittskrümmung (34) einwärts entgegen dem Hauptströmungskanal (40) derart aufweist, dass die innere Seite der äußeren Wandung (16, 17) die Oberfläche (9) der Plattformen (7, 8) im unmittelbaren Bereich vor den Schaufelblättern (6) bildet.

14. Gasturbine (1) nach einem der Ansprüche 3 bis 13, **dadurch gekennzeichnet, dass** ein Abstand (31) zwischen dem blechartigen Bauelement (23) und den Oberflächen (9) der Plattformen (7, 8) in einem stromaufseitigen Bereich unmittelbar vor Schaufelblättern (6) des Leitschaufelkranzes (4) eine Kühlluftausblasöffnung (22) bildet.

## Claims

1. Gas turbine (1) having a cooling device (10) for the cooling of platforms (7, 8) of a guide blade ring (4) of the gas turbine (1), said guide blade ring being arranged downstream in a main flow channel (40) of a combustion chamber (2), **characterized in that**, in a wall (11, 12) of the platforms (7, 8), provision is made of cooling-air passage openings (21, 22) via which cooling air (13), for film cooling, is conducted to surfaces (9) of the platforms (7, 8), wherein the wall (11, 12), at least regionally, is of at least two-layer form with, as viewed from the main flow channel (40), an outer wall (16, 17) and an inner wall (19, 20) which is spaced apart from said outer wall by a cavity (18), wherein the cavity (18) is able to be charged with cooling air (13) by way of at least one cooling-air blow-in opening (21) in the outer wall (16, 17), and at least one cooling-air blow-out opening (22) is arranged in the inner wall (19, 20) so as to extend in downstream direction to the surfaces (9) of the platforms (7, 8).

2. Gas turbine (1) according to Claim 1, **characterized in that** the cavity (18) is formed integrally with at least one of the platforms (7).

3. Gas turbine (1) according to Claim 1 or 2, **characterized in that** the inner wall (19, 20) is formed by a separate, sheet-like structural element (23).

4. Gas turbine (1) according to Claim 3, **characterized in that** the sheet-like structural element (23) is fastened to the outer wall (16, 17) using at least one fastening device (24, 25, 26).

5. Gas turbine (1) according to Claim 3 or 4, **characterized in that** the sheet-like structural element (23) is fastened to an upstream end of the wall (11, 12) in the region of a seal (33) opposite to a combustion chamber wall (14) using at least one fastening device (25).

6. Gas turbine (1) according to Claim 5, **characterized in that** the fastening device is formed by a holding bolt (24, 25) for fastening the seal (33) to the wall (11, 12).

7. Gas turbine (1) according to one of Claims 3 to 6, **characterized in that** the sheet-like structural element (23) is, with its downstream end, fixed in a form-fitting manner, in particular by means of a recess (36) which engages below an undercut (35) on the respective platform (7, 8), to at least one of the platforms (7, 8).

8. Gas turbine (1) according to one of Claims 3 to 6, **characterized in that**, by way of a defined preload, the sheet-like structural element (23) bears with its downstream end on the inner side of the outer wall (16, 17), wherein a bearing element (32) is provided on the sheet-like structural element (23) which preferably corresponds to the radial depth of the cavity (18).

9. Gas turbine (1) according to one of Claims 1 to 8, **characterized in that** the inner contour (27) of the inner wall (19, 20) is formed to be at least approximately aligned with an inner contour (28) of an adjacent component, in particular a combustion chamber wall (14).

10. Gas turbine (1) according to one of Claims 1 to 9, **characterized in that** the sheet-like structural element (23) is formed as a heat shield from a high-temperature alloy and possibly with an additional heat-resistant coating.

11. Gas turbine (1) according to one of Claims 1 to 10, **characterized in that** the sheet-like structural element (23) is formed as a peripheral ring or is of segment-shaped form.

12. Gas turbine (1) according to one of Claims 1 to 11, **characterized in that** at least one cutout, in particular a bore or a slot, is formed as a cooling-air blow-in opening (21) in the outer wall (16, 17) and has a central axis which runs inwards in the upstream direction in relation to the main flow channel (40), and at least one cutout, in particular a bore or a slot, is formed as a cooling-air blow-out opening (22) in the inner wall (19, 20) and has a central axis which runs inwards in the downstream direction in relation to the main flow channel (40) at such an angle that the cooling air emerging from the cooling-air blow-out opening (22) forms a cooling film on the surfaces (9) of the platforms (7, 8) in a region immediately in front of blades (6) of the guide blade ring (4).

13. Gas turbine (1) according to one of Claims 3 to 12, **characterized in that** the outer wall (16, 17) has, in the region of the downstream end of the cavity (18) and in an upstream region immediately in front of blades (6) of the guide blade ring (4), an in particular S-shaped cross-sectional curvature (34), inwards towards the main flow channel (40), such that the inner side of the outer wall (16, 17) forms the surface (9) of the platforms (7, 8) in the region immediately in front of the blades (6).

14. Gas turbine (1) according to one of Claims 3 to 13, **characterized in that** a spacing (31) between the sheet-like structural element (23) and the surfaces (9) of the platforms (7, 8) in an upstream region immediately in front of blades (6) of the guide blade ring (4) forms a cooling-air blow-out opening (22).

## Revendications

1. Turbine a gaz (1) avec un dispositif de refroidissement (10) destiné au refroidissement de plateformes (7, 8) d'une couronne d'aubes directrices (4) de la turbine à gaz (1) disposée en aval dans un canal d'écoulement principal (40) d'une chambre de combustion (2), **caractérisée en ce que** des orifices de passage d'air de refroidissement (21, 22) sont prévus dans une paroi (11, 12) des plateformes (7, 8), par le biais desquels de l'air de refroidissement (13) est guidé vers les surfaces (9) des plateformes (7, 8) afin de la refroidir par une pellicule d'air, la paroi (11, 12) étant réalisée au moins partiellement en au moins deux couches avec une paroi externe (16, 17) du point de vue du canal d'écoulement principal (40) et une paroi interne (19, 20) éloignée de la première par une cavité (18), la cavité (18) pouvant être alimentée en air de refroidissement (13) par au moins un orifice d'insufflation (21) d'air de refroidissement ménagé dans la paroi externe (16, 17) et au moins un orifice de sortie (22) d'air de refroidissement étant ménagé dans la paroi interne (19, 20) dans la direction en aval de manière à s'étendre vers les surfaces (9) des plateformes (7, 8).

2. Turbine à gaz (1) selon la revendication 1, **caractérisée en ce que** la cavité (18) est monobloc avec au moins l'une des plateformes (7).

3. Turbine à gaz (1) selon l'une des revendications 1 et 2, **caractérisée en ce que** la paroi interne (19, 20) est constituée d'un composant en feuille (23) distinct.

4. Turbine à gaz (1) selon la revendication 3, **caractérisée en ce que** le composant en feuille (23) est fixé sur la paroi externe (16, 17) par au moins un dispositif de fixation (24, 25, 26).

5. Turbine à gaz (1) selon l'une des revendications 3 et 4, **caractérisée en ce que** le composant en feuille (23) est fixé par au moins un dispositif de fixation (25) sur une extrémité de la paroi (11, 12) située en amont, dans la région d'un joint d'étanchéité (33) par rapport à une paroi de chambre de combustion (14).

6. Turbine à gaz (1) selon la revendication 5, **caractérisée en ce que** le dispositif de fixation est constitué par une goupille de retenue (24, 25) destinée à fixer le joint d'étanchéité (33) sur la paroi (11, 12).

7. Turbine à gaz (1) selon l'une quelconque des revendications 3 à 6, **caractérisée en ce que** le composant en feuille (23) est fixé par conformation sur au moins l'une des plateformes (7, 8) par son extrémité en aval, en particulier au moyen d'un évidement (36) en prise avec le dessous d'une contre-dépouille (35) sur la plateforme correspondante (7, 8).

8. Turbine à gaz (1) selon l'une quelconque des revendications 3 à 6, **caractérisée en ce que** le composant en feuille (23) s'appuie avec son extrémité située en aval contre le côté intérieur de la paroi externe (16, 17) par une précontrainte de valeur définie, un élément d'appui (32) étant prévu sur le composant en feuille (23) de préférence en correspondance avec la profondeur radiale de la cavité (18).

9. Turbine à gaz (1) selon l'une quelconque des revendications 1 à 8, **caractérisée en ce que** le contour intérieur (27) de la paroi interne (19, 20) est réalisé de telle sorte qu'il soit au moins approximativement à l'affleurement d'un contour intérieur (28) d'un composant voisin, en particulier d'une paroi de chambre de combustion (14).

10. Turbine à gaz selon (1) l'une quelconque des revendications 1 à 9, **caractérisée en ce que** le composant en feuille (23) est réalisé sous la forme d'un écran thermique en alliage réfractaire, éventuellement doté en supplément d'un revêtement réfractaire.

11. Turbine à gaz (1) selon l'une quelconque des revendications 1 à 10, **caractérisée en ce que** le composant en feuille (23) se présente sous la forme d'une virole circonférentielle ou sous une forme segmentée.

12. Turbine à gaz (1) selon l'une quelconque des revendications 1 à 11, **caractérisée en ce qu'**au moins un trou, en particulier un perçage ou une fente, est réalisé sous la forme de l'orifice d'insufflation (21) d'air de refroidissement ménagé dans la paroi externe (16, 17), et comportant un axe médian avec l'extension de l'axe médian s'étendant vers l'intérieur et vers l'amont par rapport au canal d'écoulement principal (40), et au moins un trou, en particulier un perçage ou une fente, est réalisé sous la forme d'un orifice de sortie (22) d'air de refroidissement ménagé dans la paroi interne (19, 20), et comportant un axe médian avec l'extension de l'axe médian s'étendant vers l'intérieur et vers l'aval par rapport au canal d'écoulement principal (40) de manière inclinée de sorte que l'air de refroidissement sortant de l'orifice de sortie (22) d'air de refroidissement forme une pellicule de refroidissement sur les surfaces (9) des plateformes (7, 8) dans une région située immédiatement devant les pales d'aube (6) de la couronne d'aubes directrices (4).

13. Turbine à gaz (1) selon l'une quelconque des revendications 3 à 12, **caractérisée en ce que**, dans la région de l'extrémité aval de la cavité (18) et dans une région amont située immédiatement devant les pales d'aube (6) de la couronne d'aubes directrices (4), la paroi externe (16, 17) présente une section transversale coudée (34), en particulier en forme de S, vers l'intérieur à l'encontre du canal d'écoulement principal (40), de sorte que le côté intérieur de la paroi externe (16, 17) constitue la surface (9) des plateformes (7, 8) dans la région immédiatement devant les pales d'aube (6).

14. Turbine à gaz (1) selon l'une quelconque des revendications 3 à 13, **caractérisée en ce que**, dans une région située en amont immédiatement devant les pales d'aube (6) de la couronne d'aubes directrices (4), un espacement (31) entre le composant en feuille (23) et les surfaces (9) des plateformes (7, 8) forme un orifice de sortie (22) d'air de refroidissement.
